(19)

Europäisches
Patentamt
European
Patent Office
Office européen
des brevets

(11) **EP 3 982 298 A1**

(12) **EUROPEAN PATENT APPLICATION**

(43) Date of publication:
**13.04.2022 Bulletin 2022/15**

(21) Application number: **20275157.4**

(22) Date of filing: **06.10.2020**

(51) International Patent Classification (IPC):
**G06N 3/08** (2006.01)    **G06N 3/04** (2006.01)
**G06F 11/00** (2006.01)    **G05B 23/02** (2006.01)

(52) Cooperative Patent Classification (CPC):
**G06N 3/084; G05B 23/0254; G06F 11/006;
G06N 3/0454**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Airbus Defence and Space Limited
Stevenage
Hertfordshire SG1 2AS (GB)**

(72) Inventors:
• **GARCÍA, Carlos Hervás
Stevenage
Hertfordshire SG1 2 AS (GB)**
• **MURRAY, Calum Alexander
Stevenage
Hertfordshire SG1 2 AS (GB)**
• **SCHARF, Arthur
Stevenage
Hertfordshire SG1 2 AS (GB)**
• **KING, Stephen Gerard
Stevenage
Hertfordshire SG1 2 AS (GB)**

(74) Representative: **Varley, James Richard et al
Venner Shipley LLP
200 Aldersgate
London EC1A 4HD (GB)**

(54) **FAULT DETECTION AND ISOLATION USING A NEURAL NETWORK**

(57) This specification describes systems and methods for detecting and isolating faults in telemetry data using a machine-learned model. According to one aspect of this specification, there is described computer implemented method of training one or more discriminator neural networks to identify anomalous telemetry data. The method comprises: generating, using one or more modification neural networks, a set of anomalous telemetry data; processing the set of anomalous telemetry data using the one or more discriminator neural networks to generate a candidate classification for each of one or more of the channels of telemetry data in the set of anomalous telemetry data; processing a further set of telemetry data corresponding to equipment functioning correctly using the one or more discriminator neural networks to generate a candidate classification for each of one or more of the channels of telemetry data in the further set of telemetry data, each classification indicative of whether the discriminator classifies the corresponding one or more channels of telemetry data input to the discriminator neural network as containing an anomaly; updating parameters of the one or more modification neural networks based on a comparison of the candidate classifications of the anomalous telemetry data to ground truth classifications of the anomalous telemetry data; and updating parameters of the one or more discriminator neural networks based on a comparison of the candidate classifications of the anomalous telemetry data to ground truth classifications of the anomalous telemetry data, and a comparison of the candidate classifications of the further set of telemetry data to ground truth classifications of the further set of telemetry data.

FIG. 3

**Description**

**Field**

This specification describes systems and methods for detecting and isolating faults in telemetry data using a machine-learned model. In particular, this specification describes the use of a machine-learned model that has trained using an adversarial approach to identify anomalous telemetry data.

**Background**

Fault detection and isolation is an important function in many critical systems such as aircraft or spacecraft. An example is during spacecraft operations, where fault detection and isolation is a critical aspect of on-board software with respect to safety, performance and reliability. In particular, the on-board Failure Detection, Isolation and Recovery (FDIR) function is a key element within the Functional Avionics chain of any modern spacecraft. Ideally, the on-board FDIR monitors the spacecraft, identifies when a fault has occurred, pinpoints the failed equipment, type of fault and its location, and triggers the necessary recovery action(s). In practice, the current standards for spacecraft FDIR, based in Out Of Limit checks and time filters on telemetry monitors, are generally enough to catch dangerous failures but are very limited in their isolation capability. This limitation can result in undesirable and unnecessary interruption of the spacecraft mission/science, costly and overly pessimistic hardware redundancy schemes, and/or increased operational costs of the spacecraft and/or constellation.

Furthermore, more complex spacecraft designs are required to meet the highly ambitious space missions of tomorrow. These have increasingly demanding goals for performance accuracy, availability and/or autonomy requirements. Similarly, with the arrival of large constellations (e.g. OneWeb, Iridum Next or Starlink), the exponential growth in number of spacecraft to operate translate into prohibitive volumes of telemetry data to process for diagnosis. Besides, interplanetary spacecraft where important telemetry time latency and/or periods with no communication from/back to Earth apply, make it impossible for the operators to respond to any failures or recover from a safe mode. As such, the on-board FDIR function is an enabler for all these cases and thus its functionality and performance will need to improve drastically.

In classical FDIR, engineers need to anticipate all possible forms of failure and create a specific design to combat it. In doing so, a fail-safe design is created. This is a significantly difficult and bespoke task.

**Summary**

According to a first aspect of this specification, there is described a computer implemented method of training one or more discriminator neural networks to identify anomalous telemetry data. The method comprises: generating, from a set of original telemetry data corresponding to equipment functioning correctly and using one or more modification neural networks, a set of anomalous telemetry data, the set of anomalous telemetry data comprising a plurality of channels of telemetry data at least one of which has been modified. The method further comprises processing the set of anomalous telemetry data using the one or more discriminator neural networks to generate a candidate classification for each of one or more of the channels of telemetry data in the set of anomalous telemetry data, each classification indicative of whether the discriminator classifies the corresponding one or more channels of telemetry data input to the discriminator neural network as containing an anomaly; and processing a further set of telemetry data corresponding to equipment functioning correctly using the one or more discriminator neural networks to generate a candidate classification for each of one or more of the channels of telemetry data in the further set of telemetry data, each classification indicative of whether the discriminator classifies the corresponding one or more channels of telemetry data input to the discriminator neural network as containing an anomaly. The method further comprises updating parameters of the one or more modification neural networks based on a comparison of the candidate classifications of the anomalous telemetry data to ground truth classifications of the anomalous telemetry data; and updating parameters of the one or more discriminator neural networks based on a comparison of the candidate classifications of the anomalous telemetry data to ground truth classifications of the anomalous telemetry data, and a comparison of the candidate classifications of the further set of telemetry data to ground truth classifications of the further set of telemetry data.

Updating parameters of the modification neural network may comprise applying an optimisation procedure through a modification objective function, the modification objective function comprising a classification objective between the candidate classifications of the anomalous telemetry data and the ground truth classifications of the anomalous telemetry data.

Updating parameters of the one or more discriminator neural networks may comprise applying an optimisation procedure through a discriminator objective function, the discriminator objective function comprising a first classification objective between the candidate classifications of the anomalous telemetry data and the ground truth classifications of the anomalous telemetry data and a second classification objective between the candidate classifications of the further set of telemetry data and the ground truth classifications of the further set of telemetry data. Each channel of the one or more channels of telemetry data classified by the one or more discriminator neural networks maybe associated with a weight, each weight dependent on a current performance of the one or more discriminator neural networks on a corresponding channel. The first and second classification objectives may each comprise a weighted sum of classification objectives over channels of telemetry data.

The original and further sets telemetry data may each comprise a plurality of monitored channels of telemetry data and one or more channels of contextual telemetry data. Each monitored channel of telemetry data corresponds to a classification output by the discriminator neural network. One or more of the monitored channels may each correspond to single output classification. Alternatively or additionally, a plurality of monitored channels may correspond to a single output classification.

The classification indicative of whether a corresponding channel of telemetry data input to the discriminator neural network contains an anomaly may comprise a probability that the corresponding one or more channels of telemetry data contains an anomaly.

Generating the set of anomalous telemetry data may comprise: inputting, into the modification neural network, one or more channels of telemetry data from the original set of telemetry data and one or more sets of random component data; and processing, using the modification neural network, the input telemetry data and random component data to generate modifications to the input telemetry data.

The one or more discriminator neural networks may comprise a plurality of neural networks, each of the plurality of neural networks configured to output the classification of one of the monitored channels of telemetry data input to the discriminator neural network.

The one or more discriminator neural network may comprise a single discriminator neural network configured to output the classification of each of the monitored channels of telemetry data input to the discriminator neural network.

The method may further comprise, for each of one or more channels of telemetry data: decomposing the telemetry data into an original signal and a standardised signal; and inputting both the original signal and the standardised signal into the discriminator neural network. Decomposing the telemetry data into an original signal and a standardised signal may comprise: determining a mean and standard deviation of an original signal of the channel of telemetry data over a predefined time period; and generating a standardised signal by shifting the original signal of the channel by the mean and dividing the result by the standard deviation.

One or more of the candidate classifications output by the discriminator neural network may correspond to an ensemble of channels of telemetry data, the ensemble comprising a plurality of channels of telemetry data.

The discriminator neural network may be further configured to output an equipment classification indicative of whether an equipment corresponding to a plurality of monitored channels of telemetry data contains an anomaly.

According to a further aspect of this specification, there is described a computer implemented method of analysing telemetry data. The method comprises: receiving, as input to one or more neural networks, a set of telemetry data, the set of telemetry data comprising a plurality of channels of telemetry data; processing the set of telemetry data through a plurality of neural network layers of the one or more neural networks; and outputting, from the neural network, a classification for each of one or more of the channels of telemetry data in the set of telemetry data, each classification indicative of whether a corresponding channel of telemetry data input to the neural network contains an anomaly.

The neural network may comprises one or more discriminator neural networks trained according to any of training methods described herein.

Each output classification may be indicative of a probability that the corresponding channel or group of channels of telemetry data input to the neural network contains an anomaly. The method may further comprise: comparing each of the output classifications to a respective threshold probability for the corresponding channel; and using the probability to classify a channel and/or equipment as anomalous by applying one or more thresholds and/or time filtering logics.

Each of the one or more neural networks may further receive as input data one or more channels of contextual data that do not correspond to an output classification.

One or more of the classifications output by the neural network may correspond to an ensemble of channels of telemetry data, the ensemble comprising a plurality of channels of telemetry data. The output from the neural network may further comprise one or more further classifications indicative of whether an equipment corresponding to a plurality of channels of the input telemetry data contains an anomaly.

According to a further aspect of this specification, there is described a system comprising one or more processors and a memory, the memory comprising computer readable code that, when executed by the one or more processors causes the system to perform any one or more of the methods described herein.

According to a further aspect of this specification, there is described a computer program product comprising computer readable code that, when executed by computing apparatus, causes the computing apparatus to perform any one or more of the methods described herein.

According to a further aspect of this specification, there is described a system comprising: a plurality of sensors monitoring one or more items of equipment and generating one or more time series of telecommands and/or telemetries; and a monitoring subsystem configured to receive telemetry data from the one or more sensors, and to analyse the telemetry data using any of the monitoring methods described herein.

The system may further comprise a fault response subsystem configured to initiate a fault response if an anomaly is detected by the monitoring subsystem.

The system maybe part of a satellite, spacecraft or aircraft.

This specification describes systems and methods that can address the issues of classical FDIR by:

a) learning the implicit relationships between the telemetries/channels within the equipment(s) being monitored by the neural network, therefore not requiring a full mastery of failure modes of equipment at design time;

b) using a data-driven approach (neural networks) to build health monitors and determine simple thresholds to detect anomalies, therefore not requiring bespoke engineering for the design and tuning of potentially complex physical monitors behind some parts of the classical FDIR function; and/or

c) isolating channels of telemetry on which anomalies occur using the neural network in addition to identifying the equipment that is anomalous. By contrast, traditional FDIR systems often lack isolation capabilities.

This specification describes an adversarial learning approach, the "Modification Discrimination Adversarial Networks" (MODISAN) approach, out of which one of the neural nets can be used for both anomaly detection and isolation on time series. However, the principles behind it could potentially be extended to other use cases beyond the time series domain with some paradigm architecture adjustments.

**Brief Description of the Drawings**

Embodiments and examples are described by way of reference to the accompanying drawings, in which:

FIG. 1 shows a schematic overview of a system for monitoring telemetry data;

FIG. 2 shows an overview of an example method of monitoring telemetry data using a neural network;

FIG 3 shows an overview of an example method of training a neural network to monitor telemetry data;

FIG.s 4A-D show schematic examples of discriminator neural network arrangements;

FIG.s 5A-D show schematic examples of modification neural network arrangements;

FIG 6 shows an example method of pre-processing telemetry data before input to a neural network;

FIG. 7 shows a flow diagram of an example method of training a neural network for monitoring telemetry data;

FIG. 8 shows a flow diagram of an example of a method for detecting anomalies in one or more items of equipment using a neural network; and

Figure 9 shows a schematic example of a system/apparatus for performing any of the methods described herein.

**Detailed Description**

This specification describes systems and methods for detecting anomalies in telemetry data using a neural network that has been trained using an adversarial approach. The adversarial approach will be referred to herein as "Modification Discrimination Adversarial Networks" (or "MODISAN" for short). The underlying principle of MODISAN training is that one or more discriminator neural network(s), D, is trained to differentiate between real and/or realistic (e.g. simulated)telemetry data and telemetry data coming from a mix of real data and data coming from a modification neural network, M. The discriminator neural network outputs a probability of fake/modified telemetry per equipment and/or channel of telemetry data. The modification neural network receives real/realistic telemetry and applies a pseudo-random modification to it. Its objective is to fool the discriminator. Thus, it is rewarded when evolving towards adopting modifying patterns that are not recognised by the discriminator as fake.

If the modification neural network has enough modifying power and randomness, ultimately discriminator has no choice but to learn the main characteristics of the normal signals and the physical relationships or "invariants" between them in order to survive the fight against the modification neural network.

After the modification neural network has explored the weaknesses of the discriminator and the discriminator has gained robustness, the modification neural network has no choice but to reduce the level of modification applied to its input signal. If training continues, ultimately no modification may be applied.

Once trained, the discriminator can be used to monitor telemetry channels in real time systems, the discriminator output being directly used as monitor or health status of the equipment and/or channel of telemetry data. The trained discriminator can be used to replace a classical FDIR monitor. Signals from the different subsystems will be fed into the discriminator, and a feed-forward pass through the discriminator will result in an output of the health score of each signal. This health score will then be used to determine whether or not an anomaly/failure has occurred. If an anomaly is present, the location of the failure will be identified - both the instrument and channel.

In terms of the overall system, the use of a trained discriminator network to replace bespoke, potentially complex and hard-to-tune classical FDIR monitors by simple thresholding of the different neural net outputs can result in a leaner (i.e. less engineering effort) and more performant (i.e. with enhanced detection and isolation leading to higher availability and autonomy) FDIR solution. This is achieved by using this data driven AI technique that learns (based on, e.g., nominal data from high fidelity simulator/testing/in-orbit telemetry) to recognise anything that is not nominal or normal. The systems and method described herein can provide the ability to achieve both anomaly detection and isolation capabilities.

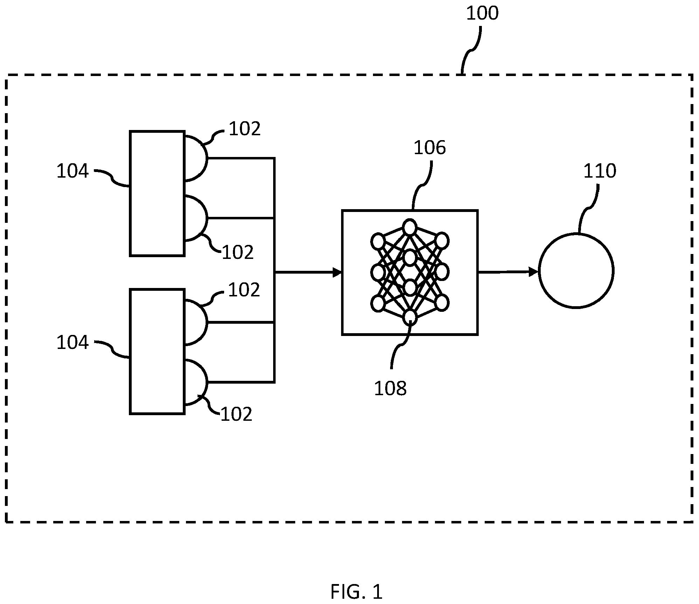

FIG. 1 shows a schematic example of a system 100 for detecting anomalies in one or more items of equipment. The system comprises one or more telemetries 102 receiving data associated with one or more items of equipment 104, each outputting telemetry data to a monitoring subsystem 106. Each equipment may output one or more channels of telemetry data to the monitoring subsystem. The monitoring subsystem uses a neural network 108 to identify whether or not an anomaly has occurred in the equipment being monitored based on the received telemetry data. Results from the monitoring subsystem 106 may be output/transmitted to a fault response subsystem 110, which initiates a fault response if an anomaly is detected.

The equipment 104 may be any subsystem/apparatus/device associated with the system 100. For example, in a critical system (such as an aircraft or spacecraft), the equipment may be a propulsion system/device, a navigation/orientation system/device (e.g. a gyroscope), a control system/device, or the like. The equipment 104 may be sensors with the telemetries or tele-commands, 102 themselves. The equipment 104 maybe experimental equipment, such as further sensors monitoring an external object. Many other examples are possible, and will be familiar to the skilled person.

The telemetry data 106 from each sensor 102 comprises a time series of measurement data from the sensor. Each equipment may output one or more channels of telemetry data. Each channel of telemetry data may comprise a time series of raw measurement data. Alternatively or additionally, one or more of the channels of telemetry data may comprise a time series of processed measurement data or even tele-commands, all referred as 102 telemetry.

The neural network 108 processes telemetry data in chunks of telemetry data that relate to a predetermined duration of time, e.g. one second's worth of telemetry data, five seconds' worth of telemetry data etc. In other words, the telemetry data input to the neural network 108 corresponds to telemetry data from a time window of fixed duration. The monitoring subsystem 106 may buffer the received telemetry data until a predetermined duration's worth of telemetry data has been received. The neural network 108 may process the telemetry data sequentially in disjoint chunks, e.g. a first time window of telemetry data is processed by the neural network, followed by a second time window of telemetry data, wherein the second time window does not overlap with the first. Alternatively, the neural network 108 may process the telemetry data sequentially in overlapping time windows, i.e. the first and second predetermined time window correspond to partially overlapping periods of time, e.g. from second 1 to 5 and from second 2 to 6 if the neural net is required to process time windows of 4 seconds every second.

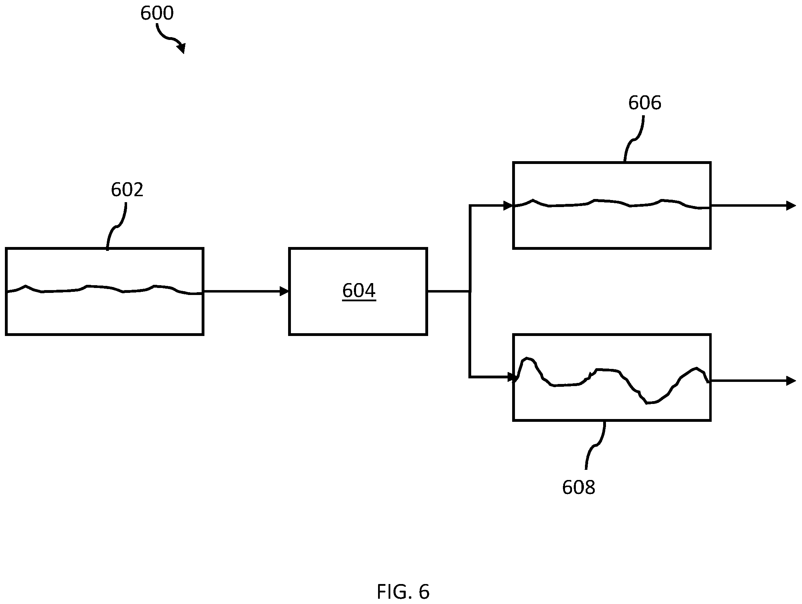

The telemetry data may undergo pre-processing before being input into the neural network 108. Example of pre-processing telemetry data are described below in relation to FIG. 6.

The system 100 may be a sub-system of one or more other systems. The system may be a local system in which each of the components of the system are located within one apparatus. As an example, the system 100 maybe a subsystem of a spacecraft, such as a satellite, or an aircraft that monitors equipment for faults. The fault response subsystem 110 may automatically initiate a fault response if an anomaly is detected, and/or transmit details of the fault to an earth based monitoring system.

The system 100 maybe a distributed system, with one or more components of the system 100 being located at a different physical location to one or more of the other components of the system. As an example, the telemetry 102, equipment 104 and monitoring subsystem 106 be part of a spacecraft, such as a satellite, or aircraft with the fault response subsystem 110 located at an earth-based monitoring system. The monitoring subsystem 106 may transmit its results to the fault response subsystem 110. In some embodiments, the results are only transmitted if an anomaly is detected.

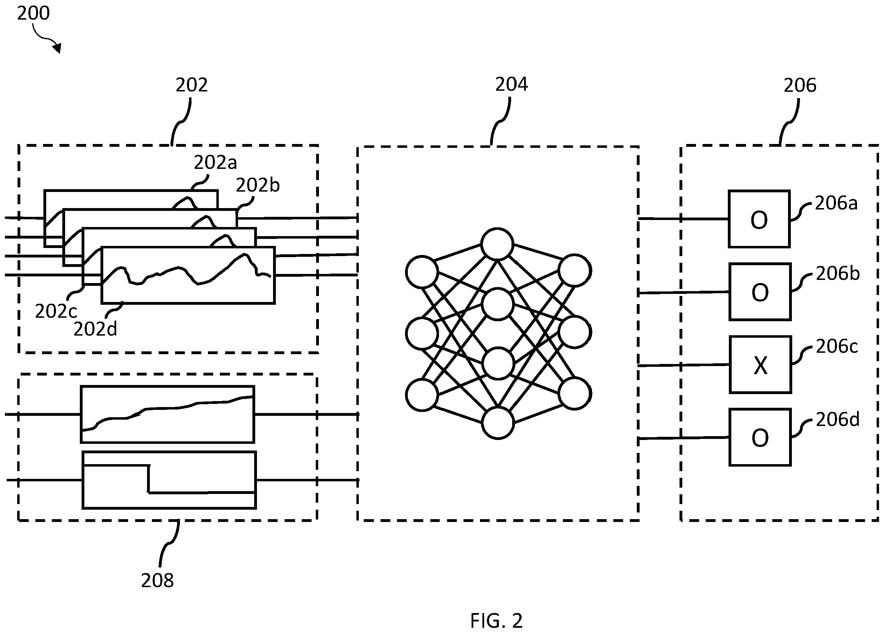

FIG. 2 shows an overview of an example method 200 of monitoring telemetry data using a neural network. One or more channels of telemetry data 202 that are being monitored (also referred to herein as "monitored channels") are input into one or more neural networks 204 and processed through a plurality of neural network layers to generate, for the monitored channels 202, output 206 indicative of whether a corresponding one or more monitored channels 102 contains an anomaly. In some embodiments, additional data 208 (also referred to herein as "contextual data") is input into and processed by the one or more neural networks 204, but does not correspond to an output 206 of the neural network. The neural network 204 may be a neural network trained according to the MODISAN approach.

Each channel of telemetry data 202a-d comprises a time series , $x_i$. In the example shown, the telemetry data 102 has four channels 202a-d, though it will be appreciated that fewer channels or more channels of telemetry data may be input into the network. Each channel of telemetry data 202a-d in the input telemetry data 202 may relate to the same time period, i.e. the time series for each channel covers the same time interval. The telemetry data 202a-d may comprise one or more time series of sensor data. Alternatively or additionally, the telemetry data 202a-d may comprise one or more telecommands issued by an algorithm, or the like.

The one or more neural networks 204 may each comprise a plurality of layers of nodes, each node associated with one or more parameters. Collectively, the parameters of the one or more neural networks are denoted by $\theta$. The parameters of each node of a neural network comprise one or more weights and/or biases. Each node may take as input one or more outputs of nodes in the previous layer, or, in an initial layer, the input telemetry data 202. The one or more outputs of nodes in the previous layer may be used by each node to generate an activation value for the node using an activation function and the parameters of the neural network 204. The one or more neural networks 204 may alternatively or additionally comprise one or more Gated Recurrent Units (GRUs).

The one or more neural networks 204 may comprise one or more convolutional layers. Each convolutional layer applies one or more convolutional filters to its input. The convolutional layers may apply strided convolutions, for example with a stride of between one and four. Each convolutional layer maybe associated with a pooling layer. One or more dense (i.e. fully connected) layers may also be present.

In some embodiments, the one or more neural networks 204 comprise a convolutional neural network (CNN) with four convolutional layers and two dense layers. The convolutional layers may have a stride of one and a kernel size of two. The pooling layers, each associated with a convolutional layer, may have a size of two and a stride of two. The number of units may double between each layer of the CNN, e.g. the first convolutional layer has a number of units equal to twice the neural network input, the second convolutional layer has a number of units equal to four times the neural network input, etc.

Alternatively or additionally, the one or more neural networks 104 may comprise one or more memory layers, such as Recurrent Neural Network (RNN) layers, Long-Short-Term memory (LSTM) layers and/or Gated Recurrent Units (GRU). Examples arrangements of the one or more neural networks are described in further detail below with reference to FIG.s 4A-D.

In some embodiments, the one or more neural networks 204 comprise a recurrent neural network (RNN) with three layers. The number of units per layer depends on properties of the data being monitored, e.g. the number of equipment units, channels, contextual data channels etc. In some embodiments, the number of units per layer may be between 50 and 100, such as between 70 and 90, e.g. 80. The units maybe GRU units.

The activation functions may comprise one or more of: exponential linear units (ELR); a swish function; a hyperbolic tangent function; a sigmoid function; a Rectified Linear Units (ReLU) function; and/or a leaky ReLU. In some embodiments, some nodes do not apply an activation function.

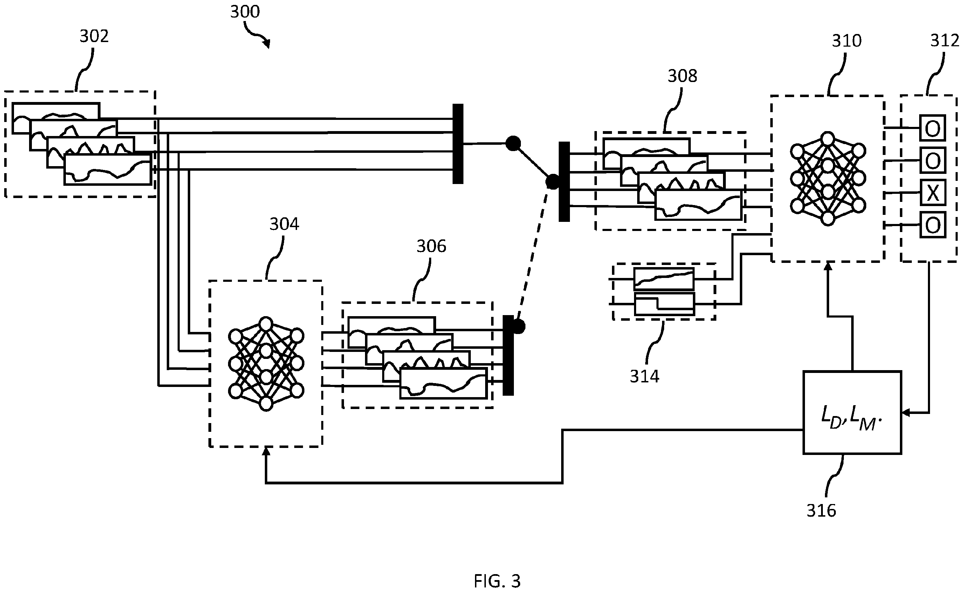

The one or more neural networks 204 are trained using a MODISAN approach to identify anomalous telemetry streams. An example MODISAN training method is described below in relation to FIG. 3. The method described there is an adversarial training method, with the one or more neural networks 204 corresponding to the one or more discriminator neural networks of the training method.

The output data 206 may be any data indicative of whether or not a corresponding one or more input channels contains an anomaly. The output data 206 comprises a plurality of output classifications, each of which classifies one or more input channels as either containing an anomaly or not.

Examples of output classifications include binary labels that indicate whether the one or more neural networks 104 classify the corresponding input as either containing an anomaly or having no anomalies. For example, an output of "1" may indicate that a corresponding input telemetry data 202 is classified as having no anomaly, with an output of "o" indicating that the corresponding input 202 is classified as having an anomaly.

Alternatively, the output classifications may be a measure of the probability that the corresponding input contains an anomaly. For example, each output classification may be a number between zero and one, with one indicating that an anomaly is definitely not present, and a zero indicating that an anomaly is definitely present (or vice versa). The output probability for each channel may be compared to a threshold probability for that channel to determine of the system should classify the corresponding channel as anomalous or normal. If the threshold probability is exceeded (or equivalently, not exceeded if the output is a probability of an error not being present), the corresponding channel is classified as anomalous. The history of the output classification or output probability can be used to determine whether the corresponding channel is classified as anomalous, e.g. a sustained high probability of anomaly event if it does not exceed the threshold can also be flagged as anomalous.

An output classification may relate to a single input channel of telemetry data 102, such as in the example shown where a first classification 206a relates to a first input channel 202a, a second classification 206b relates to a second input channel 202b, a third classification 206c relates to a third input channel 202c, and a fourth classification 2o6d relates to a fourth input channel 202d.

Alternatively or additionally, one or more of the output classifications may each relate to ensemble of input channels. An ensemble of telemetry channels comprises a plurality of channels of telemetry data 202 that are jointly classified by the one or more discriminator neural networks as either containing an anomaly or not, i.e. a single output classification is associated with the ensemble.

In some embodiments, a plurality of input channels and/or ensembles are grouped together to form a group of channels. A group of telemetry channels may, for example, all relate to the same piece of equipment or to the same subsystem in the system being monitored. The one or more neural networks 204 may output a further classification indicating whether the group contains anomalous data in addition to the classifications for each of the constituents of the group.

The additional data 208 comprises data that is not being actively monitored by the one or more neural networks 204, but provides contextual data for the input channels of telemetry data 202. The additional data 208 may be in the form of telemetry data, e.g. in a time series corresponding to the time period of the input telemetry data 202. Alternatively or additionally, the additional data 108 may comprise settings data for the equipment/systems being monitored by the one or more neural networks 204.

FIG 3 shows an overview of an example a MODISAN method 300 of training a neural network to monitor telemetry data. For this method 300, during the training process, a modification neural network 304 and discriminator neural network 310 compete, with the modification neural network attempting to fool a discriminator neural 310 into classifying modified telemetry data 306 as being real and the discriminator neural network 310 attempting to classify 312 input telemetry data 308 correctly as being either modified telemetry data 306 or un-modified telemetry data 302.

A plurality of channels of "normal" telemetry data 302 (also referred to herein as "original telemetry data", "realistic telemetry data" and/or "a first set of telemetry data") are obtained from a training dataset. The normal telemetry data 302 may be taken from equipment functioning normally and within its full operational envelope, e.g. from correctly functioning in-orbit sensors, or maybe synthetic data, e.g. simulated data. The plurality of channels of original telemetry data 302 has N-channels. In the example shown, N=4, though it will be appreciated that the number of channels may be greater or fewer than four.

One or more of channels of original telemetry data 102 are input into one or more modification neural networks 304, which processes the input original telemetry data 302 to generate one or more corresponding channels of modified telemetry data 306. In some embodiments, a random component, $z$, is also input into the one or more modification neural networks 304. The random component maybe white noise. Examples of the operation of modification neural networks are described below in further detail with reference to FIG.s 5A-D.

The one or more modification neural networks 304 maybe fully connected neural networks, each comprising a plurality of fully connected layers. The number of fully connected layers may be between two and five, e.g. three. Each fully connected layer comprises a plurality of neural network nodes. The number of nodes per layer may lie between 50 and 150, e.g. 100. However, it will be appreciated that other network sizes and/or network topologies may alternatively be used, e.g. larger/deeper networks or smaller/ shallower networks.

One or more input sets of telemetry data 308 are generated from the original telemetry data 302 and/or the modified telemetry data 306, for example by sampling the original telemetry data 302 and/or modified telemetry data 306. Each channel of the input set of telemetry data 308 is associated with a ground truth label indicative of whether that channel in the input set of telemetry data 308 is from the modified telemetry data 306 or from the original telemetry data 302.

Some sets of input telemetry data 308 comprise only original telemetry data 302, i.e. have no channels of modified telemetry data 306 present. A set of such input telemetry data 308 may be referred to as a "second set of telemetry data" or "unmodified input data", and is denoted by $x$. The discriminator output 312 for such a set of input telemetry data 308 is an N-dimensional vector, and is denoted $D(x)$. The ground truth labels for such a set of input telemetry data 308 are contained in an N-dimensional vector, denoted $y$. All components of $y$ may be the same, indicating that no modified data is present, e.g. each $y$ may be an N-dimensional vector of ones.

Some sets of input data 308 comprise one or more channels of modified telemetry data 306 and one or more channels of original telemetry data 302. Such a set of input telemetry data 308 may be referred to as an "anomalous set of telemetry data" or a "modified set of telemetry data", as it contains at least one channel of modified telemetry data 306. Such a set of telemetry data may be denoted $x_m$, were $m$ is an index indicating which of the channels/ensemble channels of the input telemetry data 308 are modified channels 206. The discriminator output 312 for such a set of input telemetry data 308 is an N-dimensional vector, and is denoted $D(x_m)$. The ground truth labels for such a set of input telemetry data 308 are contained in an N-dimensional vector, denoted $y_m$, were $m$ is an index indicating which of the channels/ensemble channels of the input telemetry data 308 are modified channels 306. For example, each $y_m$ maybe an N-dimensional vector of all ones except the zeros on the corresponding m channel monitor and its corresponding equipment monitor where the failure has been injected. In some embodiments, only one of the channels of original telemetry data 302 are replaced by a modified channel of telemetry data 306.

The input set of telemetry data 308 is input into one or more discriminator neural networks 310, $D$, and processed through a plurality of neural network layers to generate, for each of the channels/ensembles/groups of input telemetry data 308, a corresponding candidate classification 312 of the input telemetry data 308. The candidate classification is indicative of whether the one or more discriminator neural networks 310 classifies the corresponding input as coming from either the original telemetry data 302 or the modified telemetry data 306, based on current values of the parameters, $\theta$, of the one or more discriminator neural networks 310.

Examples of candidate classifications 312 include binary labels that indicate whether the one or more discriminator neural networks 310 classifies the corresponding input channel as coming from either the original telemetry data 302 or the modified telemetry data 306. For example, for a binary label, an output of "1" may indicate that a corresponding channel of input telemetry data 308 is classified as being from the set of original telemetry data 302, with an output of "0" indicating that the corresponding channel of input telemetry data 308 is classified as being from the set of modified telemetry data 302 (or vice versa).

Alternatively, the candidate classifications 312 maybe values indicative of a probability that the corresponding input channel as coming from either the original telemetry data 302 or the modified telemetry data 306. For example, the candidate classifications 312 for each channel may comprise a value between zero and one. A value of one indicates that the one or more discriminator neural networks 310 classify that channel as definitely being from the original telemetry data 302, while a value of zero indicates that the one or more discriminator neural networks 310 classify that channel as definitely being from the modified telemetry data 306 (or vice versa, depending on the definition).

In some embodiments, additional (contextual) data 314 is input into and processed by the one or more discriminator neural networks 310, but does not correspond to a candidate classification 312 output by the one or more discriminator neural networks 310. The additional data 314 may correspond to the same time period as the original telemetry data 302.

The contextual 314 data may comprise one or more flags (e.g. equipment on/off, equipment settings etc.) or categorical telemetry (e.g. AOCS submode, etc.) that can provide context relating to the rest of the monitored telemetries. In some embodiments, a one-hot encoding feature transforms a categorical telemetry/signal into a respective one-hot encoded signal inside the discriminator.

The candidate classifications 312 for the input telemetry data 308 are compared 316 to the corresponding ground truth classifications of the input telemetry data 308. The comparisons 316 are used to determine parameter updates for the one or more discriminator neural networks 310 and the one or more modification neural networks 304. Parameters of the one or more discriminator neural networks 310 are updated based on a comparison of the candidate classifications (e.g. binary classifications or probabilistic classifications) of anomalous telemetry data to ground truth classifications of that anomalous telemetry data and a comparison of the candidate classifications of input telemetry data 308 (e.g. binary classifications or probabilistic classifications) without any modified telemetry data 306 (i.e. second sets of telemetry data) to their corresponding ground truth classifications. Parameters of the one or more modification neural networks 304 are updated based on a comparison of the candidate classifications of anomalous telemetry data (e.g. binary classifications or probabilistic classifications) to their corresponding ground truth classifications, i.e. not based on the sets of telemetry data 308 that do not contain unmodified telemetry data.

The updates to the one or more discriminator neural networks 310 and the one or more modification neural networks 304 are, in some embodiments, determined after processing a batch of training data. A batch of training data comprises a plurality of sets of input data 308. The plurality of sets of input data comprises a plurality of sets of input data that contain only original telemetry data 302 (i.e. $\{x\}$) and a plurality of sets of input data that contain modified telemetry data 306 (i.e. $\{x_m\}$). Once a batch has been processed by the discriminator neural network 210, the comparisons 316 for each set of input data 308 are collectively used to determine the updates to the discriminator 310 and modification 304 neural networks. Each training set maybe balanced, i.e. contain roughly equal numbers of input telemetry data with and without modified sensor data. In some embodiments, a batch comprises at least 256 sets of input telemetry data 308. For example, a batch may contain between 512 and 1048 samples.

The MODISAN training process may be iterated over a plurality of batches for one or more training epochs until a threshold condition is satisfied. The threshold condition may be a threshold number of training epochs or iterations. For example, 100000 training iterations may be applied.

The comparison 316 may be performed using one or more loss functions (also referred to herein objective functions). The one or more discriminator neural networks 310 may be associated with a discriminator loss function, $L_D$, and the one or more modification neural networks 304 may be associated with a modification loss function, $L_M$. The modification loss function and the discriminator loss function may have conflicting objectives, effectively causing the one or more modification neural networks 304 and the one or more discriminator neural networks 310 to compete during the training process.

The discriminator loss, $L_D$, may comprise a first classification loss between the candidate classifications 312 of anomalous sets of telemetry data and corresponding ground truth classifications of the anomalous sets of telemetry data and a second classification loss between the candidate classifications 312 of unmodified sets of telemetry data and corresponding ground truth classifications of the unmodified set of telemetry data. The training objective maybe to minimise the discriminator loss. The discriminator loss may be a cross entropy loss, such as a cross entropy loss with logits. An example of such a discriminator loss function is given by:

$$S(z) = \frac{1}{1 + e^{-z}} = \frac{e^z}{e^z + 1}$$

$$D(x) = S\left(D_{Lgts}(x)\right)$$

$$Loss\ Dis = -\frac{1}{N}\sum_{mon=1}^{N}\left\{\frac{1}{Batch\_size}\sum_{sample=1}^{Batch\_size}\{[y\log(D(x)) + (1-y)\log(1-D(x))]\right.$$

$$\left. + [y_m\log(D(x_m)) + (1-y_m)\log(1-D(x_m))]\}\right\}$$

Where $D_{Lgts}(x)$ are the discriminator logits (i.e. output layer with no activation function) and $S(z)$ is the sigmoid function to limit the discriminator output between zero and one. Loss Dis is the discriminator loss function. *Batch_size* is the number of training samples used for the update (i.e. number of cases in y plus number of cases in $y_m$ which are equal to the number of cases in $x + x_m$). N is the size of the discriminator output, $D(x)$ is the Discriminator output for input data, x, without any modified data and ground truth labels, *y*, and $D(x_m)$ is the discriminator output for input data, $x_m$, with one or more modified channels of data and ground truth labels, $y_m$. It will be appreciated that other loss/objective functions may alternatively be used, such as a root-means-squared error between estimated probability and ground truth label. Many other examples of suitable loss/objective functions will be apparent to those skilled in the art.

An optimisation procedure may be applied to the loss functions in order to determine updates to the corresponding neural networks. An example of such an optimisation procedure is stochastic gradient descent, though many other examples will be familiar to the skilled person. The loss function may be computed across a mini-batch of training data comprising a plurality of unmodified input samples, *x,* and a plurality of modified input samples, $x_m$.

Optimising (e.g. minimising) *Loss Dis* implies that *"D"* is able to assign ones to real/nominal channels and zeros to modified/anomalous channels. In some embodiments, during training the number of $D(x)$ and $D(x_m)$ cases in a training batch is balanced. In addition, in some embodiments, amongst the modified/anomalous cases (i.e. $x_m$) the number of failures on each channel/equipment is balanced to avoid biases on the final *D* classification.

In some embodiments, the loss function may be modified to achieve specific goals during training and/or for the final discriminator performance. For instance, weight the channels of input data based on a current performance of the one or more discriminator neural networks 310 or include an extra function to pick the worst performing channel to focus the parameter update on the same. As an example, a weight (also referred to herein as a "priority coefficient") may be assigned to each channel when calculating the loss function that is based on the current performance of the one or more discriminator neural networks 310 on that channel, such that worst performing channel, or a channel where higher accuracy is needed, is assigned a higher weight. This can assist in equalising performance of the one or more discriminator neural networks 310 across the channels.

An example of such a discriminator loss function is given by:

$$Loss\ Diss = \max_{j}\left(-\frac{\alpha}{N}\sum_{ch=1}^{N}\left\{\frac{1}{Batch\_size}\sum_{sample=1}^{Batch\_size}\{[y\log(D(x)) + (1-y)\log(1-D(x))]\right.\right.$$

$$\left.\left. + [y_m\log(D(x_m)) + (1-y_m)\log(1-D(x_m))]\}\right\}\right)$$

Where max selects the monitor with the worst classification accuracy (i.e. higher individual contribution to the loss) such that the subsequent gradient descent focuses on the minimisation of that monitor's contribution to the loss function, $\alpha$ is the priority coefficient, j is the number of channels, N is the size of the discriminator output, $D(x)$ is the discriminator output for input data, *x,* which may or may not contain any modified data $y_m$, and ground truth labels, *y.* It will be appreciated that other loss/objective functions may alternatively be used, such as a root-means-squared error between estimated probability and ground truth label. Many other examples of suitable loss/objective functions will be apparent to those skilled in the art.

By allowing multiplying factors to the cost function to be defined, it gives the classification of certain monitor(s) higher priority and becomes the focus of the backpropagation. This is because its partial contribution to the total cost function will increase thereby improving its partial classification. This feature is particularly useful for achieving anomaly/failure detection and isolation at the equipment level first (e.g. with higher priority), then at the channel level (e.g. with lower priority). In some embodiments, a user may select the weight for each channel. This enables the user to decide which monitors the discriminator should prioritise when it comes to detecting and isolating.

In embodiments where multiple discriminator neural networks 310, one for each channel/equipment/ensemble, are used, an individual loss function for each discriminator neural networks 310 may be used. Each individual loss function compares the output of its corresponding discriminator neural network 310 to the ground truth classification of its input telemetry data. This may enhance the isolation capability of the overall set of discriminator neural networks 310. An example of such a discriminator loss function is given here:

$$Loss\ Dis_i = -\frac{1}{Batch\_size} \sum_{sample=1}^{batch\_size} \left\{ \left[ y \log\big(D(x)^i\big) \right] + \left[ (1 - y_m{}^i) \log\big(1 - D(x_m)^i\big) \right]^{m=i} \right.$$

$$\left. + \left[ \log\big(D(x_m)^i\big) \right]^{m \neq i} \right\}$$

where $D(x)^i$ is the i-th output of the full discriminator for $x$ (i.e. the Discrim_i output to input $x$), $x_m$ are input data instances where channel/ensemble channel $m$ has been replaced by modified data (i.e. output of Modification network m), $D(x_m)^i$ is the output of the i-th discriminator for input $x_m$. Note that in *Loss Dis$_i$*, the terms/brackets with the super index $m = i$ or $m \neq i$ mean that they are only accounted when the sub index is true, otherwise the term doesn't contribute in the objective function.

The modification loss, $L_M$, may comprise a first classification loss between the candidate classifications 312 of anomalous sets of telemetry data and corresponding ground truth classifications of the anomalous sets of telemetry data. The training objective may be to maximise the discriminator loss. Each modification neural network in the one or more modification neural networks may be associated with its own loss term that compares the classifications of its modifications to their ground truth classifications. The modification loss may comprise a cross entropy loss, such as a cross entropy loss with logits. An example of such a modification loss function for each modification neural network, *i*, is given below:

$$Loss\ mod\ i = \frac{1}{N} \sum_{j=1}^{N} \frac{1}{Batch\_size} \sum_{sample=1}^{batch\_size} \left\{ [(1 - y_m) \log(1 - D(x_m))]^{m=i} \right\}$$

Where for *Loss mod i*, $x_m$ are only considered when $m = i$, i.e. data instances where channel/ensemble channel $i$ has been replaced by modified data (i.e. output of Modificator i), $D(x_m)$ is the discriminator output for $x_m$, $y_m$ is a vector (e.g. of the size of the *"D"* output) of all ones except the zeros on the i-th channel monitor and its corresponding equipment monitor where the failure has been injected. This can avoid any individual modification neural network benefiting from the modification power of another modification neural network. Note that the modification loss function(s) in these embodiments are based on the MinMax GAN option and not on the Non-Saturating option, which may provide higher training stability.

In some embodiments, other adversarial loss functions, such as Wasserstein loss functions, may alternatively be used as the discriminator and/or modification loss functions.

During training, the update to the modificator neural networks 304 and the discriminator neural networks 310 may be determined separately. The modification neural networks 304 may be fixed while the discriminator parameters are updated until a first threshold condition is satisfied. This is followed by the modification neural networks 304 being updated while the discriminator neural networks 310 are fixed, until a second threshold condition is satisfied. The process then repeats. The threshold conditions may relate to a threshold value of the loss function associated with each network. For example, the first threshold condition may be the discriminator loss function falling below a first threshold value. The second condition may be the modification loss function rising above a second threshold value. The first and second threshold values may be the same. The first and second threshold values may lie in the range [0.1, 0.2], e.g. 0.15. These thresholds may be referred to as an "overtraining cost threshold". This is the value of a discriminator/modification loss function for which training of the corresponding neural networks are triggered or stopped.

In some embodiments, the overtraining cost threshold is a dynamic overtraining cost threshold, which lowers an initial value of a threshold over time and once specific conditions are reached. These condition may be checked every time a threshold number of training iterations occurs. This threshold number of iterations may be in the range [5,50], e.g. 10 This more sophisticated training logic intends to gradually force this quasi-equilibrium towards a smaller overtrain cost threshold value with the aim of improving the final performance of the discriminator 310. The rationale is that for an optimal failure/fault detection and isolation (FDI) performance of the discriminator 310, its cost function should be equal to or close to zero. However, this depends on the level of modification introduced to the signal, i.e. if the Modificator applies no modification (e.g. Modificator towards the end or the training) then the discriminator has no means to classify nominal/anomalous data.

A collapse of the modificator(s) 304 may still occur if the modificator loss function is close to zero. In some embodiments, a counter-measure may be applied that resets the modificator(s) 304 parameters when the modificator training cost stays below a predefined value for more than the predefined number of training iterations. The predefined value (which may be referred to as a "resuscitation threshold") may lie in the range [0.01, 0.1], e.g. 0.05. The predefined number of training iterations may lie in the range [500, 1500], e.g. 1000. Preventing the mode collapse of the modificator(s) 304 in this way may improve training performance.

In some implementations, an early stopping mechanism is applied to the training method. This can prevent deterioration of the discriminator 310 performance towards the final stages of the MODISAN training procedure as the generator deteriorates on a GAN (i.e. as the generator approaches the final target distribution). The early stopping mechanism may be based on a "discriminator test cost". During the training process of these embodiments, the discriminator 310 is frequently tested against a set of telemetry data comprising failures/anomalies that it has never seen before and a discriminator test cost is obtained. This test cost is a measure of how well the discriminator 310 generalises against external anomalies/failures (i.e. not coming from the Modificator(s) 304) and thus represents a good metric for how well it will perform against a real failure dataset. This can also prevent overfitting, since the discriminator accuracy is tested against something other than training data.

The principle of the discriminator test cost is to determine quickly how well the discriminator 310 generalises and/or the discriminator fault detection and isolation performance without having to run the discriminator 310 through an entire failure dataset. The discriminator test dataset comprises telemetry data comprising a random mixture of: swap_channel - a swap of two channels in the current batch; timetravel - using a signal from the same channel, replacing the signal in a channel in the current set of telemetry data with a signal from another set of telemetry data corresponding to a different time period; invert_channel - inversion of a signal from a channel; shuffle - swaping the first and second half of a signal from channel; add_bias - adding a constant bias to a random part of the signal; and/or random - a randomly selected one or more of the above options. In other embodiments, additional artificial failures as the ones described above can be used. The discriminator test cost is a measure of how accurately the discriminator 310 classifies these sets of telemetry data.

During the MODISAN training process, if/when the discriminator test cost hits a new minimum value (i.e. the current parameters of the discriminator 310 more accurately classify the discriminator test dataset than any previous parameters), the current parameters of the discriminator 310 are stored. This ensures that the degradation of the discriminator 310 during the lasts step of the training is avoided. The discriminator test cost may be calculated at "checkpoints", i.e. every time a threshold number of iterations of the training occurs. This "checkpoint threshold" may lie in the range of [50, 500] iterations, such as in the range [75, 200], e.g. 100.

To prevent unnecessary training of a model that is not improving, there is an early stopping mechanism. This may be based on a threshold number of consecutive iterations for which the performance of the discriminator 10 is not improving, i.e. the number of consecutive iterations for which there is no improvement in the discriminator test cost. The threshold number of iterations may be between 4000 and 10000 iterations, for example 5000 iterations.

Dropout regularisation may also be used to prevent overfitting during the MODISAN training and improve the generalisation capability of a network. During training, random nodes may be dropped from the networks, which in essence mimics training a slightly different neural net to the same input data. A fixed probability for each network may be used to drop nodes from each of the networks. The fixed probability for keeping a node of the modification neural network(s) 304 may lie in the range [0.8,0.99], e.g. 0.9. The fixed probability for keeping a node of the discriminator neural network(s) 310 may lie in the range [0.9, 1.0], e.g. 1. It is important to note that dropout is only applied during the training phase and is optional.

In some embodiments, once the discriminator 310 has been trained using the MODISAN approach, thresholds for detecting anomalies from its output are set. To determine whether an equipment and/or channel are faulty, their respective outputs from discriminator(s) 310 may be directly used as anomaly score indicators, i.e. monitors/health status. The actual detection and isolation may be based on a more or less simple thresholding logic of these monitors, i.e. if the health status is lower than a specified value, for a certain number of steps, the channel/equipment is deemed faulty. The measure of probability of an error on a channel may be used as a health status of that channel - a high probability indicates a low health status and vice-versa.

The thresholds may be set manually. Alternatively, the thresholds may be set automatically. For example, once training is complete (i.e. the discriminator(s) 310 have achieved a desired performance), the discriminator(s) 310 may be tested on new nominal/normal dataset (i.e. that the discriminator has never seen before). Using this nominal data, a set of thresholds are determined for each output such that the output will result in zero false triggering during new nominal simulations. These thresholds may be calculated for filtering time steps from 1 up to 10. A predefined factor, may be applied to the threshold as a safety margin to avoid false triggering. The predetermined factor may lie in the range [0.25, 0.8], such as in the range [0.4, 0.7], e.g. 0.5. The discriminator(s) 310 are then tested against a set of data with artificially injected failures, following the approach described above in relation to the discriminator test. Each of these potential solutions has a corresponding score of a false negative occurring (i.e. as a percentage of total injected failures). The thresholds in the set of thresholds are adjusted based on the performance of the discriminator(s) on this data set. An optimal tuning may occur when there are zero false triggering and the probability of a false negative and/or number of tuning steps are minimised. This can ensure a correct and fast classification of an error/anomaly.

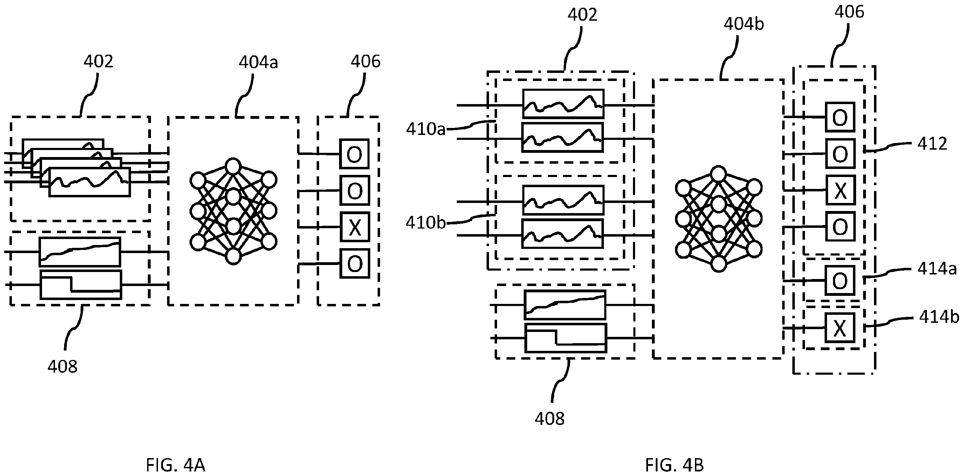

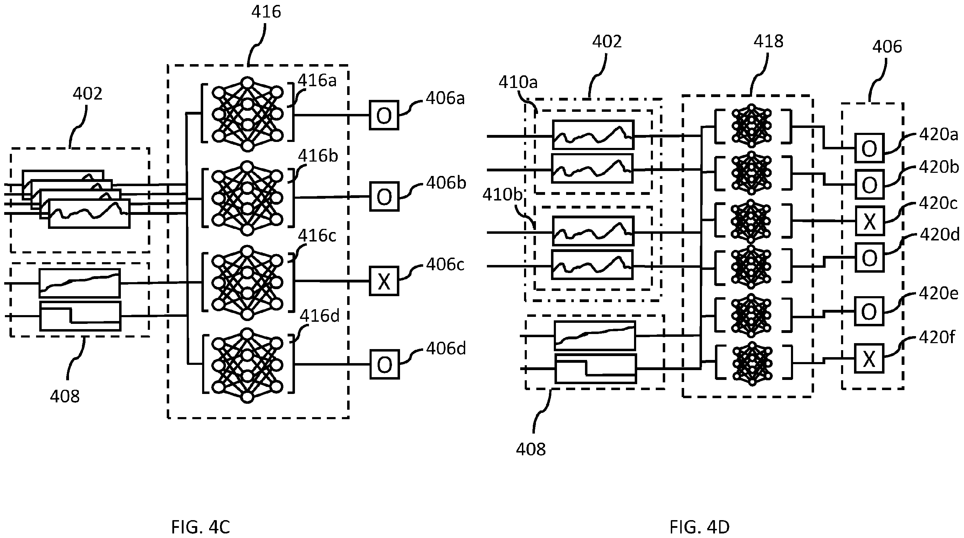

FIG.s 4A-D show schematic examples of discriminator neural network arrangements. FIG 4A shows an example of a single discriminator arrangement. FIG 4B shows a further example of a single discriminator arrangement. FIG 4C shows an example of a multiple discriminator arrangement. FIG 4D shows a further example of a multiple discriminator arrangement. The one or more discriminator neural networks of FIG.s 2 and 3 may comprise any of these arrangements, either alone or in combination.

In FIG. 4A, a single discriminator neural network 404a receives as input a plurality of channels of telemetry data 402 (in this example four channels of telemetry data) and outputs a corresponding plurality of channel classifications 406. Each output channel classification corresponds to one or more of the input channels of telemetry data 402, and is indicative of whether the corresponding one or more input channels contains an anomaly/ modified telemetry data. In the example shown, each classification relates to a single channel of input telemetry data 402, with the first, second and fourth channels of telemetry data are classified as being "normal", while the third channel of telemetry data is classified as being anomalous.

It should be noted that in some embodiments, one or more of the output classifications 406 each correspond to a plurality of input channels (referred to herein as an "ensemble of input channels"). Such an output classification 406 is indicative of whether the ensemble contains an anomaly/ modified telemetry data.

One or more additional channels of data 408 may also be input to the single discriminator neural network 404a. These additional channels of data 408 do not have a corresponding output classification 406, but provide additional context to the input telemetry data 402.

In FIG. 4B, a single discriminator neural network 404b receives as input a plurality of channels of telemetry data 402 (in this example four channels of telemetry data). The telemetry data 402 is grouped into one or more groups of telemetry data 410a-b, each group 410a-b containing a plurality of telemetry channels and/or ensembles relating to the same set of equipment. In the example shown, there are two groups: a first group 410a comprising two telemetry channels relating a first set of equipment; and a second group 410b comprising two telemetry channels relating a second set of equipment. It should be noted that the discriminator neural network 410b may also take as input single channels of telemetry data and/or ensembles of telemetry data (not shown) that do not belong to a group.

The discriminator neural network 404b outputs a plurality of classifications 406. The classifications are divided into channel/ensemble classifications 412 and group or equipment classifications 414a-b. Each channel/ensemble classification 412 corresponds to one of the input channels/ensembles of telemetry data 402, and is indicative of whether the corresponding input channel/ensemble contains an anomaly/ modified telemetry data. Each group or equipment classification 414a-b corresponds to a group 410a-b of the input telemetry data, and is indicative of whether the equipment corresponding to the group contains an anomaly/modified telemetry data. Providing classifications for grouped data in such a way can allow anomalous/faulty equipment to be identified, even if the neural network 404b does not identify individually anomalous telemetries.

In the example shown, the first, second and fourth channels of input telemetry data 402 are classified as being "normal", while the third channel of input telemetry data 402 is classified as being anomalous. The first group classification 414a indicates that the first group 410a is normal, while the second group classification 414b indicates that the second group 410b is anomalous.

As in FIG 4A, one or more additional channels of data 408 may also be input to the single discriminator neural network 404b. These additional channels of data 408 do not have a corresponding output classification 406, but provide additional context to the input telemetry data 402.

The use of a single discriminator 404 can reduce the memory and inference time requirements of the method, which may be particularly beneficial in situations where the available computer memory or computing power is limited, e.g. on a satellite/ spacecraft.

In FIG. 4C, a plurality of discriminator neural networks 416 each receive as input a plurality of channels of telemetry data 402 (in this example four channels of telemetry data each). Each of the plurality of discriminator neural networks 416a-d outputs a single classification 406a-d indicative of whether a corresponding input channel/ensemble of the plurality of input channels 402 contains an anomaly/modified data. Using a plurality of neural networks can increase the anomaly/failure isolation capabilities of the system.

In the example shown, the first discriminator neural network 416a outputs a classification 406a corresponding to the first input channel of telemetry data that indicates the first channel of telemetry data is normal. The second discriminator neural network 416b outputs a classification 406b corresponding to the second input channel of telemetry data that indicates the second channel of telemetry data is normal. The third discriminator neural network 416c outputs a classification 406c corresponding to the third input channel of telemetry data that indicates the third channel of telemetry data is anomalous. The fourth discriminator neural network 416d outputs a classification 406d corresponding to the fourth input channel of telemetry data that indicates the fourth channel of telemetry data is normal.

As in FIG 4A, one or more additional channels of data 408 may also be input into one or more (e.g. each of) the plurality of discriminator neural networks 404c. These additional channels of data 408 do not have a corresponding output classification 406a-d, but provide additional context to the input telemetry data 402.

In FIG. 4D, a plurality of discriminator neural networks 418 each receive as input a plurality of channels of telemetry data 402 (in this example four channels of telemetry data each). The telemetry data 402 is grouped into one or more groups of telemetry data 410a-b, each group 410a-b containing a plurality of telemetry channels and/or ensembles relating to the same set of equipment. In the example shown, there are two groups: a first group 410a comprising two telemetry channels relating a first set of equipment; and a second group 410b comprising two telemetry channels relating a second set of equipment. It should be noted that the discriminator neural network 418 may also take as input single channels of telemetry data and/or ensembles of telemetry data (not shown) that do not belong to a group, i.e. individual channels of telemetry data.

Each of the plurality of discriminator neural networks 418 outputs a single classification 420a-f indicative of whether a corresponding input channel/ensemble of the plurality of input channels 402 or group/equipment of channels 410a-b contains an anomaly/modified data. In the example shown, four classifications 420a-d each correspond to one of the four input channels 402, and two classifications 420e-f each correspond to one of the two groups of telemetry data 410a-b.

Similarly to FIG 4A, in the example shown in FIG. 4D, one or more additional channels of data 408 may also be input into one or more (e.g. each of) the plurality of discriminator neural networks 418 These additional channels of data 408 do not have a corresponding output classification 420a-f, but provide additional context to the input telemetry data 402.

The use of multiple discriminators can improve the detection and isolation performance of the system, as each discriminator can be specialised to detecting anomalies/failures on a particular channel/ensemble/group of telemetry data.

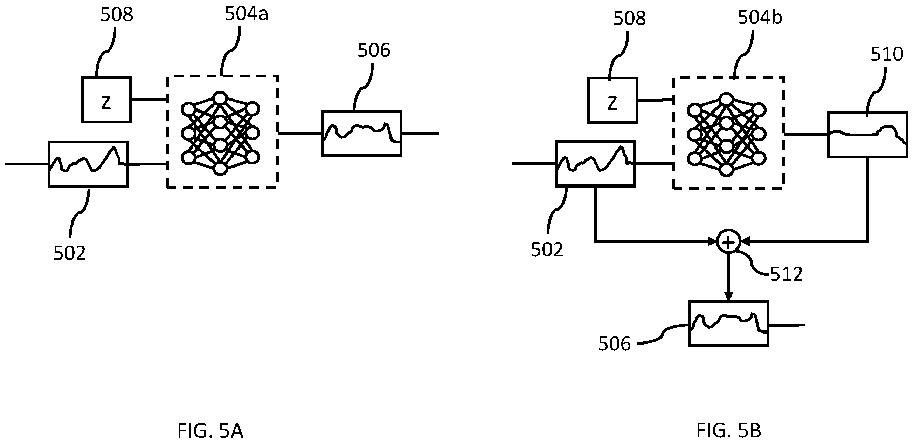

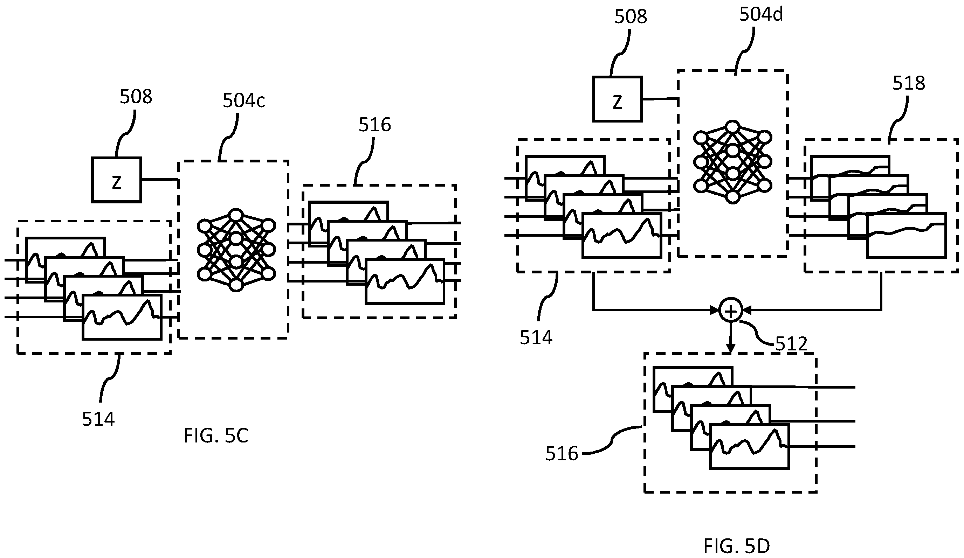

FIG.s 5A-5D show schematic examples of modification neural network arrangements for use in the MODISAN training method. FIG. 5A shows an example of a modification neural network for modifying a single channel of telemetry data. FIG. 5B shows an example of a modification neural network for modifying a single channel of telemetry data using an additive approach. FIG. 5C shows an example of a modification neural network for modifying a plurality of channels of telemetry data. FIG. 5D shows an example of a modification neural network for modifying a plurality of channels of telemetry data using an additive approach. The one or more modification neural networks of FIG. 2 may comprise any one or more of these arrangements, either alone or in combination.

In FIG. 5A, a single modification neural network 504a receives as input a channel of telemetry data 502 and outputs a corresponding modified channel of telemetry data 506. The modification neural network may also receive as input random component data 508, z. Each channel of telemetry data may be associated with its own modification neural network 504a. The output modified channel of telemetry data 506 can be used to replace an original (i.e. correct) channel of telemetry data in a set of telemetry data to create an anomalous set of telemetry data.

In FIG. 5B, a single modification neural network 504b receives as input a channel of telemetry data 502 and outputs a corresponding modification 510 to the input channel of telemetry data 502. The modification neural network may also receive as random component data 508, z. Each channel of telemetry data may be associated with its own modification neural network 504b. The modification 510 is added 512 to the input channel of telemetry data 502 to generate the modified channel of telemetry data 506. The output modified channel of telemetry data 506 can be used to replace an original (i.e. correct) channel of telemetry data in a set of telemetry data to create an anomalous set of telemetry data.

The use of a modificator neural network for each channel can improve the performance of the trained discriminator(s). The "exploratory" modification power of individual modificator network(s) can be higher than a single modificator network. This in turn can force the discriminator(s) to learn better the relevant telemetry relationships or "invariants" in order to identify up the anomalous channel.

In FIG. 5C, a single modification neural network 504c receives as input a plurality of channels, e.g. ensemble channels, of telemetry data 514 and outputs a corresponding plurality of modified channels of telemetry data 516. The modification neural network may also receive as random component data 508, z. Each of the output modified channels of telemetry data 516 can be used to replace an original (i.e. correct) channel of telemetry data in a set of telemetry data to create an anomalous set of telemetry data.

In FIG. 5D, a single modification neural network 504D receives as input a plurality of channels, e.g. ensemble channels, of telemetry data 514 and outputs a corresponding plurality of modifications 518 to the input channels of telemetry data 514. The modification neural network may also receive as random component data 508, z. The plurality of modifications 518 are each added 512 to a corresponding input channel of telemetry data 514 to generate a plurality of modified channel of telemetry data 516. Each of the output modified channels of telemetry data 506 can be used to replace an original (i.e. correct) channel of telemetry data in a set of telemetry data to create an anomalous set of telemetry data.

The use of additive modificator(s), such as those shown in FIG.s 5B and 5D, can lead to better performance of the discriminator on some type of telemetry data, such as when the telemetry data has a very particular/characteristic time shape/signature (e.g. discrete or thresholded signals).

FIG. 6 shows an example method 600 of pre-processing telemetry data before input to a neural network.

In general, one or more of the channels of telemetry data may be pre-processed before being input into a neural network (e.g. the discriminator neural network and/or modification neural network). The pre-processing may comprise applying a scaling to one or more of the channels of telemetry data. The scaling may comprise: rescaling the telemetry data to lie in a fixed range, e.g. [0,1]; rescaling the data such that a maximum absolute value is a fixed number, e.g. 1; standardising features by subtracting the mean and normalising by a standard deviation; and/or subtracting a median value and scaling according to an interquartile range.

In the example shown, a channel of telemetry data 602 is decomposed 604 into a first signal 606 and a second signal 608. The first signal 606 may, in some embodiments, just be the original telemetry data 602, or a normalised version of it. The second signal 608 may be a standardised signal representing a time series of the deviations of the telemetry data 602 from its mean value. The second signal 608 may be normalised, e.g. normalised by the standard deviation. Both the first signal 606 and the second signal 608 may be input into a neural network as one channel of telemetry data.

This decomposition may be applied to one or more of the input channels of telemetry data into a neural network. In some embodiments, it is applied to only a subset of the total set of input channels.

Pre-processing the data in this way can improve training stability and the accuracy of fault detection and isolation when dealing with telemetry data that has a large numerical range, and that may often appear constant when looked at globally.

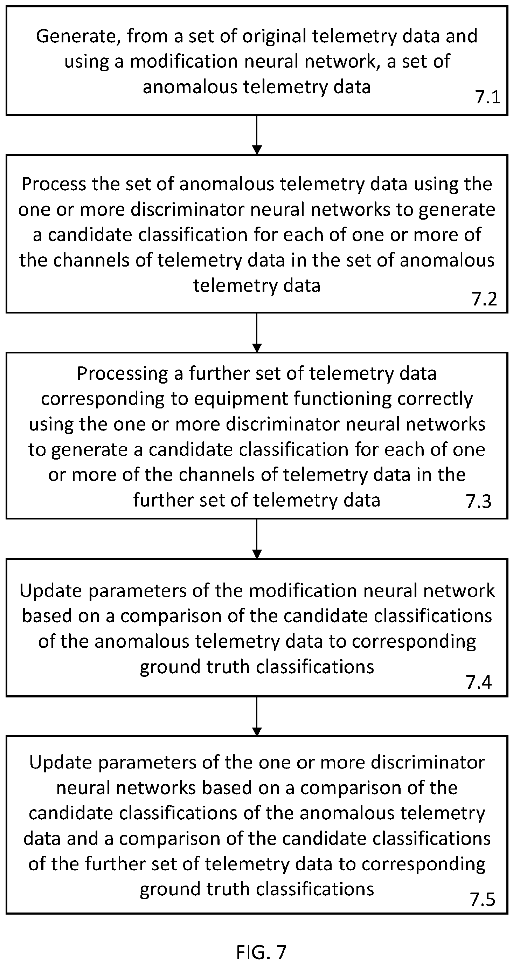

FIG. 7 shows a flow diagram of an example of a method for training a neural network to detect anomalies in one or more items of equipment. The method may be performed by one or more computers operating in one or more locations. The method may correspond to the method described in relation to FIG. 3, i.e. a MODISAN training method.

At operation 7.1, a modification neural network is used to generate a set of anomalous telemetry data from a set of original telemetry data. The original telemetry data corresponds to a correctly functioning set of equipment/sensors. The original telemetry data may be generated using a simulation of correctly functioning equipment, collected from correctly functioning equipment, or a combination of simulation and collection. The set of anomalous telemetry data comprises a plurality of channels of telemetry data, at least one of which is a modified channel of telemetry data.

At operation 7.2, the set of anomalous telemetry data is processed using the one or more discriminator neural networks to generate a candidate classification for each of one or more of the channels of telemetry data in the set of anomalous telemetry data. Each classification indicative of whether the discriminator classifies the corresponding one or more channels of telemetry data input to the discriminator neural network as containing an anomaly.

At operation 7.3, a further set of telemetry data corresponding to equipment functioning correctly is processed using the one or more discriminator neural networks to generate a candidate classification for each of one or more of the channels of telemetry data in the further set of telemetry data. Each classification is indicative of whether the discriminator classifies the corresponding one or more channels of telemetry data input to the discriminator neural network as containing an anomaly.

The classifications of operations 7.2 and 7.3 may be binary classifications. Alternatively, the classifications may be a probability that a corresponding input channel of telemetry data contains an anomaly.

At operation 7.4, parameters of the one or more modification neural networks are updated based on a comparison of the candidate classifications of the anomalous telemetry data to ground truth classifications of the anomalous telemetry data. The updates may be determined after a batch of input data has been processed.

A modification loss function may be used to perform the comparison. The modification loss function may comprise a classification loss, such as a cross-entropy loss, between the candidate classifications of the anomalous telemetry data and the ground truth classifications of the anomalous telemetry data. An optimisation procedure, such as stochastic gradient descent, may be applied to the modification loss function to determine the updates.

At operation 7.5, parameters of the one or more discriminator neural networks are updated based on a comparison of the candidate classifications of the anomalous telemetry data to ground truth classifications of the anomalous telemetry data, and a comparison of the candidate classifications of the further set of telemetry data to ground truth classifications of the further set of telemetry data. The updates may be determined after a batch of input data has been processed.

The comparison may be performed by a discriminator loss function. The discriminator loss function may comprise a first classification loss, such as a cross entropy loss, between the candidate classifications of the anomalous telemetry data and the ground truth classifications of the anomalous telemetry data. The discriminator loss function may further comprise a second classification loss, such as a cross entropy loss, between the candidate classifications of the further set of telemetry data and the ground truth classifications of the further set of telemetry data.

Operations 7.1 to 7.5 may be iterated until a threshold condition is met.

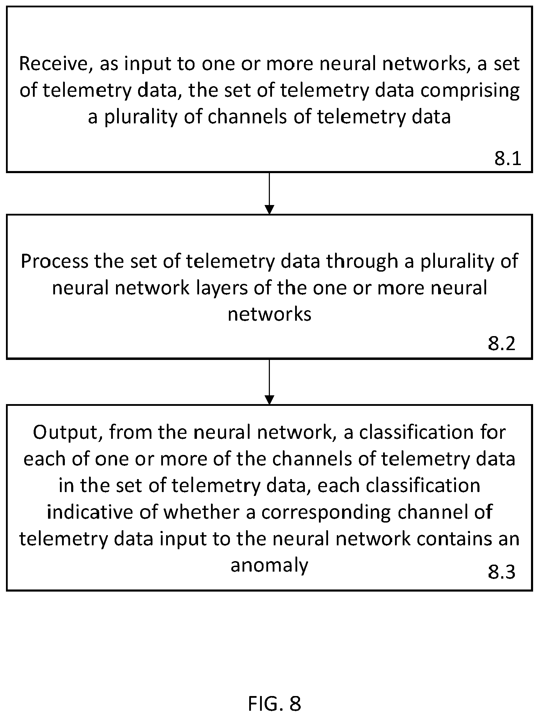

FIG. 8 shows a flow diagram of an example of a method for detecting anomalies in one or more items of equipment using a neural network. The method may be performed by one or more computers operating in one or more locations. The method may correspond to the method described in relation to FIG.s 1 and 2, and may use a discriminator neural network trained according to the MODISAN approach.

At operation 8.1, a set of telemetry data is received as input to one or more neural networks. The set of telemetry data comprises a plurality of channels of telemetry data. Each channel of telemetry data may comprise a time series of sensor data corresponding to the same time period as the other telemetry channels. The telemetry data may be pre-processed before input into the neural network, for example as described above in relation to FIG. 6. One or more channels of contextual data may also be input into the one or more neural networks. The contextual channels do not have a corresponding output classification, but provide additional data (such as other telemetry data and/or system settings) to the one or more neural networks.

At operation 8.2, the set of telemetry data is processed through a plurality of neural network layers of the one or more neural networks. The one or more neural networks may be any of the (discriminator) neural networks described in relation to FIG.s 1-5.

At operation 8.3, a classification for each of one or more of the channels of telemetry data in the set of telemetry data is output by the neural network. Each classification indicative of whether a corresponding channel of telemetry data (or ensemble of telemetry data/group of telemetry data) input to the neural network contains an anomaly. Each output classification may be indicative of a probability that the corresponding channel/ensemble/group of telemetry data input to the neural network contains an anomaly.

In some embodiments, the method further comprises comparing each of the output classifications to a respective threshold probability for the corresponding channel. The threshold probability is a threshold probability that an error is present. If this I exceeded by the probability of an error in a channel indicated by the output classification, the channel as classified as being anomalous.

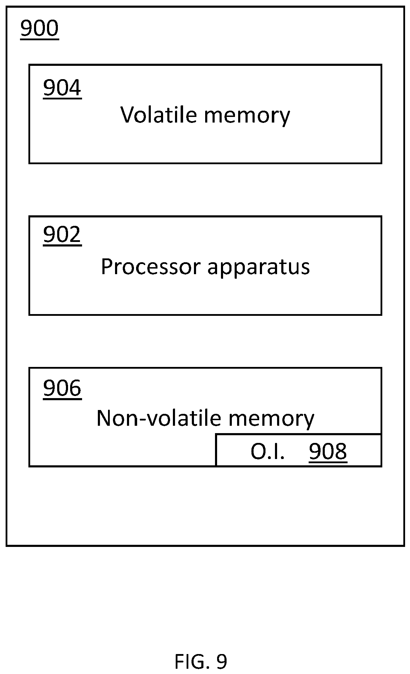

Figure 9 shows a schematic example of a system/apparatus for performing any of the methods described herein. The system/apparatus shown is an example of a computing device. It will be appreciated by the skilled person that other types of computing devices/systems may alternatively be used to implement the methods described herein, such as a distributed computing system. One or more of these systems/apparatus may be used to perform the methods described herein.

The apparatus (or system) 900 comprises one or more processors 902. The one or more processors control operation of other components of the system/apparatus 900. The one or more processors 902 may, for example, comprise a general-purpose processor. The one or more processors 902 may be a single core device or a multiple core device. The one or more processors 902 may comprise a Central Processing Unit (CPU) or a Graphical Processing Unit (GPU). Alternatively, the one or more processors 902 may comprise specialised processing hardware, for instance a RISC processor or programmable hardware with embedded firmware. Multiple processors may be included.

The system/apparatus comprises a working or volatile memory 904. The one or more processors may access the volatile memory 904 in order to process data and may control the storage of data in memory. The volatile memory 904 may comprise RAM of any type, for example, Static RAM (SRAM), Dynamic RAM (DRAM), or it may comprise Flash memory, such as an SD-Card.

The system/apparatus comprises a non-volatile memory 906. The non-volatile memory 906 stores a set of operation instructions 908 for controlling the operation of the processors 902 in the form of computer readable instructions. The non-volatile memory 906 may be a memory of any kind such as a Read Only Memory (ROM), a Flash memory or a magnetic drive memory.

The one or more processors 902 are configured to execute operating instructions 908 to cause the system/apparatus to perform any of the methods described herein. The operating instructions 908 may comprise code (i.e. drivers) relating to the hardware components of the system/apparatus 900, as well as code relating to the basic operation of the system/apparatus 900. Generally speaking, the one or more processors 902 execute one or more instructions of the operating instructions 908, which are stored permanently or semi-permanently in the non-volatile memory 906, using the volatile memory 904 to store temporarily data generated during execution of said operating instructions 908.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 9, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims.

The various example embodiments described herein are described in the general context of method steps or processes, which may be implemented in one aspect by a computer program product, embodied in a computer-readable medium, including computer-executable instructions, such as program code, executed by computers in networked environments. A computer readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the foregoing specification, embodiments have been described with reference to numerous specific details that can vary from implementation to implementation. Certain adaptations and modifications of the described embodiments can be made. Other embodiments can be apparent to those skilled in the art from consideration of the specification and practice of the invention disclosed herein. It is intended that the specification and examples be considered as exemplary only, with a true scope and spirit of the invention being indicated by the following claims. It is also intended that the sequence of steps shown in figures are only for illustrative purposes and are not intended to be limited to any particular sequence of steps. As such, those skilled in the art can appreciate that these steps may be performed in a different order while implementing the same method.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the example embodiments presented herein.

## Claims

1. A computer implemented method of training one or more discriminator neural networks to identify anomalous telemetry data, the method comprising:

   generating, from a set of original telemetry data corresponding to equipment functioning correctly and using one or more modification neural networks, a set of anomalous telemetry data, the set of anomalous telemetry data comprising a plurality of channels of telemetry data at least one of which has been modified;
   processing the set of anomalous telemetry data using the one or more discriminator neural networks to generate a candidate classification for each of one or more of the channels of telemetry data in the set of anomalous telemetry data, each classification indicative of whether the discriminator classifies the corresponding one or more channels of telemetry data input to the discriminator neural network as containing an anomaly;
   processing a further set of telemetry data corresponding to equipment functioning correctly using the one or more discriminator neural networks to generate a candidate classification for each of one or more of the channels of telemetry data in the further set of telemetry data, each classification indicative of whether the discriminator classifies the corresponding one or more channels of telemetry data input to the discriminator neural network as containing an anomaly;
   updating parameters of the one or more modification neural networks based on a comparison of the candidate classifications of the anomalous telemetry data to ground truth classifications of the anomalous telemetry data;

and
updating parameters of the one or more discriminator neural networks based on a comparison of the candidate classifications of the anomalous telemetry data to ground truth classifications of the anomalous telemetry data, and a comparison of the candidate classifications of the further set of telemetry data to ground truth classifications of the further set of telemetry data.

2. The method of any preceding claim, wherein updating parameters of the modification neural network comprises applying an optimisation procedure through a modification objective function, the modification objective function comprising a classification objective between the candidate classifications of the anomalous telemetry data and the ground truth classifications of the anomalous telemetry data.

3. The method of any preceding claim, wherein updating parameters of the one or more discriminator neural networks comprises applying an optimisation procedure through a discriminator objective function, the discriminator objective function comprising a first classification objective between the candidate classifications of the anomalous telemetry data and the ground truth classifications of the anomalous telemetry data and a second classification objective between the candidate classifications of the further set of telemetry data and the ground truth classifications of the further set of telemetry data.

4. The method of claim 3, wherein:

each channel of the one or more channels of telemetry data classified by the one or more discriminator neural networks is associated with a weight, each weight dependent on a current performance of the one or more discriminator neural networks on a corresponding channel; and
the first and second classification objectives each comprise a weighted sum of classification objectives over channels of telemetry data.

5. The method of any preceding claim, wherein:

the original and further sets telemetry data each comprise a plurality of monitored channels of telemetry data and one or more channels of contextual telemetry data; and
each monitored channel of telemetry data corresponds to a classification output by the discriminator neural network.

6. The method of any preceding claim, wherein the classification indicative of whether a corresponding channel of telemetry data input to the discriminator neural network contains an anomaly comprises a probability that the corresponding one or more channels of telemetry data contains an anomaly.

7. The method of any preceding claim, wherein generating the set of anomalous telemetry data comprises:

inputting, into the modification neural network, one or more channels of telemetry data from the original set of telemetry data and one or more sets of random component data;
processing, using the modification neural network, the input telemetry data and random component data to generate modifications to the input telemetry data.

8. The method of any preceding claim, wherein the one or more discriminator neural networks comprise a plurality of neural networks, each of the plurality of neural networks configured to output the classification of one of the monitored channels of telemetry data input to the discriminator neural network.

9. The method of any of claims 1 to 7, wherein the one or more discriminator neural network comprises a single discriminator neural network configured to output the classification of each of the monitored channels of telemetry data input to the discriminator neural network.

10. The method of any preceding claim, further comprising, for each of one or more channels of telemetry data:

decomposing the telemetry data into an original signal and a standardised signal; and
inputting both the original signal and the standardised signal into the discriminator neural network.

11. The method of claim 10, wherein decomposing the telemetry data into an original signal and a standardised signal comprises:

determining a mean and standard deviation of an original signal of the channel of telemetry data over a predefined time period; and

generating a standardised signal by shifting the original signal of the channel by the mean and dividing the result by the standard deviation.

12. The method of any preceding claim, wherein one or more of the candidate classifications output by the discriminator neural network corresponds to an ensemble of channels of telemetry data, the ensemble comprising a plurality of channels of telemetry data.

13. The method of any preceding claim, wherein the discriminator neural network is further configured to output an equipment classification indicative of whether an equipment corresponding to a plurality of monitored channels of telemetry data contains an anomaly.

14. A computer implemented method of analysing telemetry data, the method comprising:

receiving, as input to one or more neural networks, a set of telemetry data, the set of telemetry data comprising a plurality of channels of telemetry data;

processing the set of telemetry data through a plurality of neural network layers of the one or more neural networks; and

outputting, from the neural network, a classification for each of one or more of the channels of telemetry data in the set of telemetry data, each classification indicative of whether a corresponding channel of telemetry data input to the neural network contains an anomaly.

15. The method of claim 14, wherein the neural network comprises one or more discriminator neural networks trained according to any of claims 1 to 13.

16. The method of any of claims 14 or 15, wherein each output classification is indicative of a probability that the corresponding channel or group of channels of telemetry data input to the neural network contains an anomaly, and wherein the method further comprises:

comparing each of the output classifications to a respective threshold probability for the corresponding channel; and

using the probability to classify a channel and/or equipment as anomalous by applying one or more thresholds and/or time filtering logics.

17. The method of any of claims 14-16, wherein each of the one or more neural networks further receives as input data one or more channels of contextual data that do not correspond to an output classification.

18. The method of any of claims 14-17, wherein one or more of the classifications output by the neural network corresponds to an ensemble of channels of telemetry data, the ensemble comprising a plurality of channels of telemetry data.

19. The method of any of claims 14-18, wherein the output from the neural network further comprises one or more further classifications indicative of whether an equipment corresponding to a plurality of channels of the input telemetry data contains an anomaly.

20. A system comprising one or more processors and a memory, the memory comprising computer readable code that, when executed by the one or more processors causes the system to perform a method according to any of the preceding claims.

21. A computer program product comprising computer readable code that, when executed by computing apparatus, causes the computing apparatus to perform a method according to any of claims 1-19.

22. A system comprising:

a plurality of sensors monitoring one or more items of equipment and generating one or more time series of telecommands and/or telemetries; and

a monitoring subsystem configured to receive telemetry data from the one or more sensors, and to analyse the telemetry data using the method of any of claims 12 to 19.

23. The system of claim 22, further comprising a fault response subsystem configured to initiate a fault response if an anomaly is detected by the monitoring subsystem.

24. The system of any of claims 22 or 23, wherein the system is part of a satellite, spacecraft or aircraft.

FIG. 1

FIG. 2

FIG. 3

FIG. 4A

FIG. 4B

EP 3 982 298 A1

FIG. 4C

FIG. 4D

EP 3 982 298 A1

FIG. 5B

FIG. 5A

FIG. 5C

FIG. 5D

EP 3 982 298 A1

FIG. 6

Generate, from a set of original telemetry data and using a modification neural network, a set of anomalous telemetry data

7.1

Process the set of anomalous telemetry data using the one or more discriminator neural networks to generate a candidate classification for each of one or more of the channels of telemetry data in the set of anomalous telemetry data

7.2

Processing a further set of telemetry data corresponding to equipment functioning correctly using the one or more discriminator neural networks to generate a candidate classification for each of one or more of the channels of telemetry data in the further set of telemetry data

7.3

Update parameters of the modification neural network based on a comparison of the candidate classifications of the anomalous telemetry data to corresponding ground truth classifications

7.4

Update parameters of the one or more discriminator neural networks based on a comparison of the candidate classifications of the anomalous telemetry data and a comparison of the candidate classifications of the further set of telemetry data to corresponding ground truth classifications

7.5

FIG. 7

Receive, as input to one or more neural networks, a set of telemetry data, the set of telemetry data comprising a plurality of channels of telemetry data

8.1

Process the set of telemetry data through a plurality of neural network layers of the one or more neural networks

8.2

Output, from the neural network, a classification for each of one or more of the channels of telemetry data in the set of telemetry data, each classification indicative of whether a corresponding channel of telemetry data input to the neural network contains an anomaly

8.3

FIG. 8

**900**

**904**
Volatile memory

**902**
Processor apparatus

**906**
Non-volatile memory

O.I.　**908**

FIG. 9

Europäisches
Patentamt

European
Patent Office

Office européen
des brevets

## EUROPEAN SEARCH REPORT

Application Number

EP 20 27 5157

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GIORGIA RAMPONI ET AL: "T-CGAN: Conditional Generative Adversarial Network for Data Augmentation in Noisy Time Series with Irregular Sampling", ARXIV.ORG, CORNELL UNIVERSITY LIBRARY, 201 OLIN LIBRARY CORNELL UNIVERSITY ITHACA, NY 14853, 20 November 2018 (2018-11-20), XP080937116, | 14 | INV. G06N3/08 G06N3/04 G06F11/00 G05B23/02 |
| Y | * sections 4, 4.1 and 4.2 * | 1-13, 15-24 | |
| Y | KASUN BANDARA ET AL: "Improving the Accuracy of Global Forecasting Models using Time Series Data Augmentation", ARXIV.ORG, CORNELL UNIVERSITY LIBRARY, 201 OLIN LIBRARY CORNELL UNIVERSITY ITHACA, NY 14853, 6 August 2020 (2020-08-06), XP081734979, * section 3 * | 1-13, 15-22 | |
| Y | ISOLA PHILLIP ET AL: "Image-to-Image Translation with Conditional Adversarial Networks", 2017 IEEE CONFERENCE ON COMPUTER VISION AND PATTERN RECOGNITION (CVPR), IEEE COMPUTER SOCIETY, US, 21 July 2017 (2017-07-21), pages 5967-5976, XP033249958, ISSN: 1063-6919, DOI: 10.1109/CVPR.2017.632 [retrieved on 2017-11-06] * section 3.1 * | 10,11 | TECHNICAL FIELDS SEARCHED (IPC) G06N |

-/--

The present search report has been drawn up for all claims

| Place of search | Date of completion of the search | Examiner |
|---|---|---|
| Munich | 29 March 2021 | Regidor Arenales, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

| | Europäisches Patentamt |
|---|---|
| | European Patent Office |
| | Office européen des brevets |

**EUROPEAN SEARCH REPORT**

Application Number

EP 20 27 5157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LI Z Q ET AL: "A Dynamic Neural Network-based Reaction Wheel Fault Diagnosis for Satellites", INTERNATIONAL JOINT CONFERENCE ON NEURAL NETWORKS, 2006. IJCNN '06, PISCATAWAY, NJ : IEEE OPERATIONS CENTER, PISCATAWAY, NJ, USA, 16 July 2006 (2006-07-16), pages 3714-3721, XP010949078, DOI: 10.1109/IJCNN.2006.1716609 ISBN: 978-0-7803-9490-2 * sections 2 and 3 * ----- | 23,24 | |

| | |
|---|---|
| | TECHNICAL FIELDS SEARCHED (IPC) |

The present search report has been drawn up for all claims

| Place of search | Date of completion of the search | Examiner |
|---|---|---|
| Munich | 29 March 2021 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)